# EUROPÄISCHE PATENTSCHRIFT

(11) **EP 2 783 044 B1**
(45) Veröffentlichungstag und Bekanntmachung des Hinweises auf die Patenterteilung: **05.10.2016**
(21) Anmeldenummer: 12795388.3
(22) Anmeldetag: 23.11.2012
(51) Int. Cl.: D21H 27/10, B32B 29/00, B65D 65/38, B65D 65/46, C09D 131/04, D06M 15/00, D21H 19/12, D21H 19/20, D21H 21/16

(54) **VERWENDUNG VON DISPERSIONEN AUF BASIS VON POLYVINYLACETAT ALS BARRIERESCHICHT**
USE OF DISPERSIONS BASED ON POLYVINYL ACETATE AS A BARRIER LAYER
DISPERSIONS À BASE DE POLYVINYLACÉTATE UTILISÉES EN TANT QUE COUCHE BARRIÈRE

(30) Priorität: 25.11.2011 DE 102011087067
(43) Veröffentlichungstag der Anmeldung: 01.10.2014
(73) Patentinhaber: Henkel AG & Co. KGaA, 40589 Düsseldorf (DE)
(72) Erfinder: MISIAK, Hanns, 42781 Haan (DE); EICHELMANN, Holger, 40724 Hilden (DE); HÜBNER, Christina, 40764 Langenfeld (DE); SOMMER, Oliver, 40593 Düsseldorf (DE)
(86) Internationale Anmeldenummer: PCT/EP2012/073461
(87) Internationale Veröffentlichungsnummer: WO 2013/076241

(56) Entgegenhaltungen:
- EP-A2- 1 365 060
- WO-A1-2009/134538
- CH-A- 329 738
- DE-A1- 4 238 770
- GB-A- 1 269 306

## Beschreibung

Die Erfindung betrifft die Verwendung wässriger Dispersionen auf Basis von Polyvinylacetat zur Herstellung einer Beschichtung auf folienförmigen Substraten zur Verminderung der Diffusion von ölhaltigen Stoffen. Die Erfindung betrifft weiterhin Verpackungen zur Verwendung für Lebensmittel und Medizinprodukte, wobei die Verpackung eine diffusionsvermindernde Beschichtung auf Basis von Polyvinylacetat aufweist.

Polyvinylacetatdispersionen (PVAc-Dispersionen) sind allgemein bekannt. Polyvinylacetatdispersionen in verschiedenen Zusammensetzungen werden beispielsweise als Klebstoff eingesetzt. Dabei ist es bekannt, beispielsweise eine wässrige PVAc-Dispersion herzustellen und diese auf der Oberfläche eines Substrates aufzutragen. Dieses wird danach mit einem zweiten gleichen oder unterschiedlichen Substrat verklebt. Nach dem Trocknen der Klebstoffschicht wird so ein Unterverbund der beiden Substrate hergestellt. Diese Anwendung kann für verschiedene Substrate, beispielsweise auch für Papier, Holz oder andere Substrate eingesetzt werden.

Die WO 2009/134538 A1 beschreibt eine wässrige Beschichtungszusammensetzung als Barriereschicht, die ein polymeres Bindemittel und Aminstabilisatoren enthält. Weiterhin soll die Zusammensetzung Füllstoffe in Partikelform enthalten, beispielsweise schichtförmige Partikel wie Kaolin, Calciumcarbonat, Titandioxid, Aluminiumoxidhydrat und andere. Es werden verschiedene Polymere beschrieben, die in der Dispersion eingesetzt werden können, unter anderem auch Polyvinylacetat. Als Test für die Beschreibung der Barrierewirkung wird die Sauerstoffdurchgangsrate durch ein beschichtetes und ein unbeschichtetes Substrat bestimmt. Es wird die Verminderung der Durchgangsrate im Zusammenhang mit der pigmenthaltigen Dispersion bestimmt.

Die EP 1365060 A2 beschreibt wasserbasierte, hydrophobe Barrierebeschichtungsmittel. Diese enthalten Polyvinylacetatdispersionen oder Ethylenvinylacetatemulsionen zusammen mit einer Mischung an Paraffinwachsen. Als Substrat werden Non-wovens, Textilien oder ähnliche Substrate beschrieben.

Aus DE 4238770 A1 sind verrottbare faserverstärkte Folien bekannt. Diese bestehen aus einer auf einen Beschichtungsträger aufgebrachten selbstvernetzenden Kunstharzdispersion eines Vinylacetat-Ethylen-Copolymerisates. Der Kunstharzdispersion können zur Steuerung der Barrierewirkung gegenüber Wasserdampf und Rauchgas feinkörnige Pigmente zugegeben werden. Eine Barrierewirkung gegen Kohlenwasserstoffe ist nicht angesprochen.

DE 202010005911 U1 offenbart vollständig biologisch abbaubare Mehrschichtfolien, die neben einer Haftvermittlerschicht (a) wenigstens eine vorzugsweise innenliegende, vollständig biologisch abbaubare Barriereschicht (b) aufweisen. Die Barriereschicht kann als Gasbarriereschicht, Wasserdampfbarriereschicht, Ölbarriereschicht oder Barriereschicht gegen Duftstoffe und/oder Aromen ausgebildet sein und muss aus wenigstens einem vollständig biologisch abbaubaren Polymeren hergestellt sein. Als bevorzugte Polymere werden zumindest teilverseifte Polyvinylacetate, welche einen Verseifungsgrad von wenigstens 50 mol-% aufweisen, und Ethylen-Vinylalkohol-Copolymere, welche einen EthylenAnteil von höchstens 20 mol-% aufweisen, genannt. Die Herstellung der Mehrschichtfolien kann nach beliebigen Herstellungsverfahren erfolgen, wobei konkret lediglich Extrusion und Co-Extrusion genannt werden. Die Beschichtung eines folienförmigen Substrats mit einer wässrigen Dispersion wird nicht genannt.

Aus CH 329738 A ist ein Verfahren zum Verpacken von Lebensmitteln und anderem verderblichem Gut bekannt, wobei auf das zu verpackende Gut direkt oder unter Zwischenschaltung einer Unterlage ein Film aufgebracht wird, der unter Verwendung einer Dispersion erhalten wird, die ein Kunstharz und eine hydrophile wachsartige Substanz, z.B. Lanettewachs oder Bienenwachs enthält. Letztere dient der Aufnahme von Feuchtigkeit aus der Umgebung und soll verhindern, dass die Beschichtung durch diese Feuchtigkeit angegriffen wird. Die Problematik der Diffusion ölartiger Substanzen durch folienförmige Substrate wird nicht angesprochen.

CH 415446 A beschreibt ein konservierend wirkendes Einwickel- und Verpackungsmaterial und ein Verfahren zu dessen Herstellung. Dabei sind 0,5 bis 20 g Calciumsorbat pro m² Oberfläche des Einwickel- und Verpackungsmaterials auf diesem mittels eines Trägerstoffes fixiert. Bei dem Trägerstoff kann es sich um verschiedenste Polymere, unter anderem um Polyvinylacetat oder dessen Mischpolymerisate handeln. Die Ausbildung von Barrierebeschichtungen ist nicht genannt.

Der Stand der Technik beschreibt nicht, dass mit besonderen Bindemitteln auf einfache Art und Weise geringe Mengen an ölartigen Substanzen an der Diffusion durch dünne Substrate gehindert werden können.

Es ist allgemein bekannt, dass in der Lebensmittelindustrie verschiedene Verpackungen eingesetzt werden. Diese können auf Basis von Polymerfolien, Papier, Karton oder entsprechenden Verbundwerkstoffen hergestellt werden. Es ist üblich, dass diese Substrate auf einer Seite bedruckt werden. Dazu sind verschiedene Druckfarben bekannt. Zur Herstellung dieser Druckfarben ist es aber allgemein üblich, dass diese neben Pigmenten und/oder Farbstoffen Öl oder ölartige Substanzen aufweisen. Wird die entsprechende Druckfarbe auf ein Substrat gedruckt, kann die Farbe gegebenenfalls auch chemisch fixiert werden. Vorhandene Hilfsmittel wie die oben erwähnten Öle oder ähnliche Verbindungen, bleiben jedoch in geringen Mengen in dem Druckbild und dem darunter befindlichen Substrat erhalten. Es ist bekannt, dass diese ölähnlichen Substanzen durch verschiedene Substrate migrieren können. Werden Verpackungen aus recyclisierten Papierwerkstoffen hergestellt, ist häufig nicht nur die Oberfläche, sondern das gesamte Substrat mit solchen Substanzen verunreinigt. Solche Substanzen werden häufig unter den Begriffen MOSH (mineral oil saturated hydrocarbons) und MOAH (mineral oil aromatic hydrocarbons) zusammengefasst.

Es ist erwünscht, dass diese Substanzen in den verpackten Gütern (Füllgütern) nicht enthalten sind. Beispielsweise sollen Nahrungsmittel oder medizinische Produkte nicht mit Öl oder ölhaltigen Substanzen verunreinigt sein. Andernfalls können sich entweder Geschmack oder Geruch des verpackten Gutes ändern, es können Veränderungen in der Zusammensetzung auftreten, und es ist möglich, dass die so verunreinigten Produkte auch Gesundheitsgefahren hervorrufen können. Dabei können schon geringe Mengen negative Auswirkungen haben.

Deswegen sind schon verschiedene Versuche unternommen worden, solche ölartigen diffusions- und migrationsfähigen Bestandteile zu vermeiden. Es ist einerseits möglich, Farbstoffe zu wählen, die diese Bestandteile in ihrer Zusammensetzung nicht enthalten. Das schränkt aber die Auswahl der Druckfarben ein, außerdem besitzen diese oft schlechtere anwendungstechnische Eigenschaften. Weiterhin ist es möglich, bestimmte Folienzusammensetzungen einzusetzen, die im Wesentlichen eine Migration verhindern oder solche Substanzen nicht enthalten. Das kann durch spezielle Kunststoffe, Folien oder durch Metallfolien erzielt werden. Solche Verpackungen sind jedoch teuer und erfordern zusätzliche Arbeitsschritte.

Aufgabe der vorliegenden Erfindung ist es deswegen, wässrige Dispersionen als Beschichtungsmittel für flächige Substrate bereitzustellen, wobei die Beschichtung sich zwischen verpacktem Gut und einem aufgebrachten Druckbild befinden und als Barriereschicht eine Migration von ölartigen Substanzen vermindern soll. Weiterhin soll eine kostengünstige und schnelle Verarbeitung ermöglicht werden, insbesondere sollen diese Beschichtungen für Substrate aus Papier, Karton oder ähnlichen natürlichen Produkten geeignet sein.

Die Aufgabe wird gelöst durch eine Verwendung von wässrigen Dispersionen enthaltend mindestens 50 Gew-% (bezogen auf den Festkörper) mindestens eines Polyvinylacetatcopolymers A und mindestens ein davon unterschiedliches Polymer B, wobei Polymer B Hydroxy- und/oder ionische Gruppen aufweist, als Barrierebeschichtung auf folienförmigen Substraten zur Vermeidung einer Diffusion von ölartigen Bestandteilen.

Unter Festkörper wird im Sinne der vorliegenden Erfindung die Summe aller Bestandteile der Dispersion mit Ausnahme des Wassers verstanden. In der Regel handelt es sich bei diesen Bestandteilen um Feststoffe, die im Wasser dispergiert oder gelöst vorliegen. Bei den Bestandteilen kann es sich aber auch um flüssige, in der Regel schwerflüchtige Substanzen handeln. Auch diese werden dem Festkörper zugerechnet.

Gegenstand der Erfindung sind weiterhin Verpackungen aus folienförmigen Substraten, die auf einer dem Verpackungsinneren zugewandten Seite eine Beschichtung zur Vermeidung einer Diffusion von ölartigen Bestandteilen aufweisen, die mittels Aufbringen von wässrigen Dispersionen, enthaltend mindestens 50 Gew-% (bezogen auf den Festkörper) mindestens eines Polyvinylacetatcopolymers A und mindestens ein davon unterschiedliches Polymer B, wobei Polymer B Hydroxy- und/oder ionische Gruppen aufweist, hergestellt ist.

Als Substrate sind die bekannten flexiblen, flachen Substrate und Trägermaterialien geeignet, die beispielsweise in der Verpackungsindustrie eingesetzt werden. Es kann sich dabei um Ein- oder Mehrschichtsubstrate handeln, beispielsweise Polymerfolien aus Polyethylen, Polypropylen, Polyester, Papiersubstrate, Karton oder ähnliche Substrate aus Verbundwerkstoffen. Solche Substrate sind bekannt, sie können eine Schichtdicke von 50 bis zu 1000 µm aufweisen. Die entsprechenden Substrate sind üblicherweise auf einer Seite, der Außenseite, mit einem Druckbild versehen. Es können auch zusätzliche Beschichtungen auf dieser Außenseite aufgetragen sein. Die Innenseite der Substrate kann direkt dem Verpackungsgut zugewendet sein, es können sich jedoch auch noch weitere Schichten auf dem Trägermaterial befinden.

Solche folienförmigen Substrate und Verfahren zur Herstellung solcher Substrate sind dem Fachmann bekannt. Sie können hergestellt werden und direkt weiterverarbeitet werden. Es ist jedoch auch möglich, dass sie als Teilfertigprodukt hergestellt werden und erst beim Kunden zur endgültigen Form, beispielsweise einer Verpackung, weiterverarbeitet werden.

Bevorzugt handelt es sich bei den folienförmigen Substraten um poröse Substrate, insbesondere um Papier oder Karton.

Die erfindungsgemäß eingesetzten wässrigen Dispersionen enthalten mindestens 50 Gew.-% (bezogen auf den Festkörper der Dispersion) mindestens eines Polyvinylacetatcopolymeren A. Die Mengenangabe bezieht sich dabei auf die Gesamtmenge aller enthaltenen Polyvinylacetatcopolymere. Vorzugsweise beträgt die Menge an Polyvinylacetatcopolymeren A mindestens 60 Gew.-%, besonders bevorzugt von 60 bis 99 Gew.-%, ganz besonders bevorzugt von 65 bis 98 Gew.-% (jeweils bezogen auf den Festkörper).

Wässrige Polyvinylacetatcopolymer-Dispersionen sind dem Fachmann im Prinzip bekannt. Es handelt sich dabei insbesondere um Copolymere auf Basis von durch radikalische Emulsions- oder Suspensionspolymerisation umgesetzten Monomeren. Der Begriff Dispersion soll in dieser Erfindung auch Emulsionen, Suspensionen oder wässrige Lösungen umfassen.

Unter Polyvinylacetatcopolymeren werden erfindungsgemäß solche Copolymere verstanden, die mindestens 80 mol-% an Struktureinheiten, die unmittelbar durch Polymerisation von Vinylacetat erhalten werden, und mindestens eine weitere Struktureinheit (CoMonomer) enthalten. Bevorzugte Polyvinylacetatcopolymere enthalten mindestens 85 mol-%, vorzugsweise mindestens 87 mol-% an Struktureinheiten, die unmittelbar durch Polymerisation von Vinylacetat erhalten werden.

Die weiteren Struktureinheiten resultieren aus dem Einbau von anderen Monomeren als Vinylacetat oder der chemischen Modifikation, insbesondere Hydrolyse, eines Teils der Struktureinheiten, die unmittelbar durch Polymerisation von Vinylacetat erhalten werden.

Als andere Monomere können andere Vinylester zum Einsatz kommen, beispielsweise Ester aus Vinylalkohol und C3 bis C6 - Monocarbonsäuren, beispielsweise Vinylhexanoat, Vinylpropionat und/oder Vinyl-n-butyrat. Es können auch Anteile an polymerisierbaren Monomeren eingesetzt werden, die in anionische Gruppen überführbare funktionelle Gruppen tragen, beispielsweise Carboxylgruppen, Anteile an unpolaren copolymerisierbaren Monomeren, wie aromatische Monomere oder ungesättigten Carbonsäureester, Anteile an polare Gruppen tragenden Monomeren und gegebenenfalls geringe Anteile an polymerisierbaren Verbindungen mit mehr als einer Doppelbindung.

Es können verschiedene copolymerisierbare Monomere eingesetzt werden. Es sollen aber bevorzugt keine halogenierten Monomere verwendet werden, kein Ethylen oder Monomere, die miteinander reagierende funktionelle Gruppen aufweisen, die später bei Lagerung oder Applikation miteinander vernetzen können.

Weiterhin können gegebenenfalls copolymerisierbare Monomere enthalten sein, die als weitere funktionelle Gruppe Säuregruppen enthalten. Es kann sich dabei um anorganische Säuregruppen handeln, wie Sulfonsäure-, Phosphorsäure-, Boronsäure- oder Phosphonsäuregruppen, oder bevorzugt um Carbonsäurengruppen. Beispiele dafür sind Vinylphenylsulfonsäure, Vinylsulfonsäure, Vinylphosphorsäure oder Vinylphenylphosphonsäure. Insbesondere können α,β-ungesättigte C3 bis C9 -Mono- oder Dicarbonsäuren enthalten sein, insbesondere C3 bis C5. Besonders bevorzugt handelt es sich dabei um Acrylsäure, Methacrylsäure, Itaconsäure, Crotonsäure und/oder Maleinsäure, Sorbinsäure, Fumarsäure oder deren Halbester mit C1- bis C4-Alkoholen. Es können auch die entsprechenden Carbonsäureanhydride eingesetzt werden.

Weiterhin können erfindungsgemäß geeignete Copolymere zusätzlich unpolare Monomere enthalten, d.h. diese sollen keine polaren Gruppen aufweisen. Beispiele dafür sind Ester aus α,β-ethylenisch ungesättigten C2 bis C5 -Mono- oder Dicarbonsäuren mit C1 bis C12 -linearen oder verzweigten Alkanolen, wie beispielsweise Acrylsäure- und Methacrylsäuremethyl-, -ethyl-, -n-butyl-, -iso-butyl- und -2-ethylhexylester, Crotonsäuremethyl-, -ethyl-, -propylester, Maleinsäure- und Fumarsäuredimethyl- oder -di-n- butylester. Weiterhin können als unpolare Monomere Vinylester langkettiger linearer oder verzweigter Monocarbonsäuren enthalten sein. Beispiele dafür sind Vinylester von C7 bis C18-Mono-carbonsäuren, wie Stearinsäure, Laurinsäure oder Versaticsäuren.

Ebenso ist es nicht ausgeschlossen, dass die Polymere durch Verzweigungsbausteine miteinander schwach vernetzt sind oder einen verzweigten Aufbau besitzen. Das kann durch geringe Anteile an mehrfachfunktionellen Monomeren erreicht werden. Es kann sich dabei um di- oder polyfunktionelle Monomere handeln. Diese polyfunktionellen Monomere führen zu einer Verzeigung bzw. Vernetzung innerhalb der Polymerpartikel. Auf diese Weise lässt sich auch das Quellverhalten oder die Viskosität der Dispersion beeinflussen. Das Molekulargewicht der Copolymere ist vorzugseise hoch. Es liegt vorzugsweise über 250000 g/mol (M_{w}, über GPC gegen Polystyrolstandard bestimmt).

Bevorzugt kommen Polyvinylacetatcopolymere zum Einsatz, die neben Struktureinheiten, die unmittelbar durch Polymerisation von Vinylacetat erhalten werden, als weitere Struktureinheit nur eine Struktureinheit enthalten, die durch Hydrolyse eines Teils der Vinylacetat-Struktureinheiten erhalten werden kann. Mit anderen Worten handelt es sich bei den bevorzugten Polyvinylacetatcopolymeren um teilhydrolysierte Polyvinylacetatpolymere. Der Hydrolysegrad liegt bei höchstens 20 mol-%, vorzugsweise bei höchstens 15 mol-% und besonders bevorzugt bei höchstens 13 mol-%. Entsprechende Polyvinylacetatcopolymere sind kommerziell erhältlich. Bevorzugt werden die Polyvinylacetatcopolymere eingesetzt, die von der Firma Henkel AG & Co KGaA unter den Bezeichnungen Adhesin A6058 und Wormalit PM 5208 vertrieben werden.

Gegebenenfalls müssen zur Herstellung der Polyvinylacetatcopolymere Schutzkolloide eingesetzt werden. Als Schutzkolloid zur Herstellung der Polymerdispersion können anionische oder nicht-ionische Substanzen eingesetzt werden. Beispiele dafür sind natürliche Polymere, wie Stärkeether und/oder Celluloseether oder deren Derivate, z.B. modifiziert durch Oxidation, Veresterung, Veretherung, sauren Abbau, insbesondere Hydroxyalkyletherstärken, Hydroxyalkylcellulosen, Carboxyalkylcellulosen, Carboxyalkyletherstärken; Dextrine oder Hydroxyalkyldextrine. Diese können einzeln oder im Gemisch eingesetzt werden.

Die Schutzkolloide sollen, gegebenenfalls auch nach Neutralisation, anionisch oder neutral sein. Solche Produkte sind kommerziell erhältlich und können vom Fachmann nach ihren Eigenschaften ausgewählt werden.

Geeignete Polyvinylacetatcopolymer-Dispersionen können nach an sich bekannten Verfahren in wässriger Lösung durch radikalische Polymerisation in Gegenwart von Schutzkolloiden oder Tensiden hergestellt werden. Verfahren zur Herstellung der Copolymere sind dem Fachmann bekannt. Außerdem sind solche Dispersionen in unterschiedlicher Zusammensetzung mit verschiedenen Molekulargewichten kommerziell erhältlich.

Die erfindungsgemäß eingesetzten wässrigen Dispersionen enthalten neben mindestens 50 Gew-% (bezogen auf den Festkörper) mindestens eines Polyvinylacetatcopolymers A auch mindestens ein davon unterschiedliches Polymer B, wobei Polymer B Hydroxy- und/oder ionische Gruppen aufweist. Durch die im Polymer enthaltenen Hydroxy- und/oder ionischen Gruppen weist Polymer B einen stark polaren Charakter auf. Überraschenderweise hat sich gezeigt, dass durch Zusatz dieser polaren Polymere die Barriereeigenschaften im Vergleich zu Beschichtungen auf Basis reiner Polyvinylacetatcopolymere deutlich verbessert werden.

Vorzugsweise ist Polymer B ausgewählt aus Polyvinylalkoholen, Polyelektrolyten, Oligo- und Polysacchariden und deren Derivaten, wie z.B. Cellulosederivaten, Chitosanderivaten und deren Mischungen.

Als Polyvinylalkohole können handelsübliche Produkte zum Einsatz kommen. Diese weisen in der Regel Hydrolysegrade von 98 bis 99 mol-% bzw. 87-89 mol-% auf. Vorzugsweise werden Polyvinylalkohole eingesetzt, die einen Hydrolysegrad zwischen 70 und 99 Gew.-%, vorzugsweise von 85 bis 99 Gew.-% aufweisen.

Bevorzugte Polyelektrolyte, welche auch Polyampholyte umfassen, sind ausgewählt aus Gummi arabicum, Copolymeren des Vinylpyrrolidons mit mindestens einem Monomer, welches eine quaternäre Ammoniumgruppe enthält, und Salzen der Polyacrylsäuren, der Polymethacrylsäuren, der Poly(acrylsäure-co-acroleine), der Polyalginsäuren, der Pektine, der Polyphosphorsäuren, der Polyvinylphosphonsäuren, der Polyvinylsulfonsäuren, der Polyvinylschwefelsäuren und der Poly(styrol-4-sulfonsäuren).

Als Cellulosederivate kommen vorzugsweise Hydroxymethylcellulosen, Hydroxyethylcellulosen, Hydroxypropylcellulosen, Hydroxypropylmethylcellulosen, Cellulosecarbamate und/oder Carboxymethylcellulosen zum Einsatz.

Bevorzugte Chitosanderivate sind ausgewählt aus Chitosanpyroglutamat, Chitosanlactat und Hydroxypropylchitosan.

Aus der Gruppe der Poly- und Oligosaccharide, welche teilweise auch Polyelektrolytcharakter aufweisen, da sie zumindest vereinzelt Carboxyl- bzw. Carboxylatgruppen (in Salzform) enthalten können, kommen des Weiteren in Frage: Dextrane, Agarose, Galactane, Carrageen, Taragummi, Johannisbrotkernmehl, Xanthan, Galactomannane, Guarmehl, Karayagummi, Secalin, Gliadin, Tragant, Glycosaminoglycane.

Besonders bevorzugte Polymere B sind ausgewählt aus Polyvinylalkoholen, Poly(natriumacrylaten), Poly(natriumstyrolsulfonaten), Carboxymethylcellulosen, Hydroxypropylmethylcellulosen und deren Mischungen.

Die Gesamtmenge an Polymer B (bezogen auf den Festkörper) beträgt vorzugsweise 1 bis 50 Gew-%, besonders bevorzugt 1 bis 40 Gew.-% und ganz besonders bevorzugt 2 bis 35 Gew-%.

Weiterhin können die erfindungsgemäß eingesetzten Dispersionen bis zu 49 Gew.-% (bezogen auf den Festkörper) an Hilfsmitteln enthalten, beispielsweise Tenside, Benetzungsmittel, Entschäumer, Stabilisatoren, Pigmente, Farbstoffe, Füllstoffe, Antioxidantien, Photostabilisatoren, Biozide, Fluoreszensmarker, Puffer, pH-Regler, Verdickungsmittel, Thixotropiermittel und andere inerte Polymere. Vorzugsweise liegt die Gesamtmenge an Hilfsmitteln jedoch bei höchstens 40 Gew.-%, vorzugsweise bei höchstens 30 Gew.-%, besonders bevorzugt bei höchstens 20 Gew.-%, ganz besonders bevorzugt bei höchstens 10 Gew.-%, insbesondere bevorzugt bei höchstens 5 Gew.-% und weiter bevorzugt bei höchstens 1 Gew.-% (jeweils bezogen auf den Festkörper). Bevorzugt sind jedoch keine Wachse und/oder Lösemittel enthalten.

Die Hilfsmittel können dabei bereits bei der Herstellung des Polyvinylacetatcopolymers A und/oder des Polymers B eingebracht werden, solange diese nicht die Polymerisation stören. Auch bei der Herstellung der als Beschichtungsmittel eingesetzten Dispersion können Hilfsmittel zugefügt werden.

Die geeignete Dispersion kann einen grenzflächenaktiven Stoff enthalten. Darunter werden Stoffe verstanden, die die Grenzflächenspannung zu Wasser herabsetzen, wie Entschäumer, Tenside und Benetzungsmittel. Diese können zusätzlich zu den oben genannten Schutzkolloiden enthalten sein. Solche Stoffe enthalten in der Regel hydrophile und hydrophobe Gruppen. Ein Teil der grenzflächenaktiven Stoffe kann vor der Polymerisation zugesetzt werden oder sie werden erst in die Dispersion eingearbeitet. Diese dienen zur Vermeidung von Schaum, zur Verbesserung der Benetzung, sowie zur Stabilisierung der allein nicht wasserlöslichen Anteile an Monomeren, Polymeren oder Additiven, ggf. auch von Pigmenten oder Füllstoffen. Es können anionische, nichtionische, ampholytische Tenside oder deren Gemische enthalten sein. Beispiel dafür sind anionische Tenside, wie Alkylsulfate, Alkylethersulfate, Alkylarylethersulfate, Fettalkoholsulfonate, Alkylsulfonate, Alkylarylsulfonate; Ester und Halbester der Sulfobernsteinsäure, die gegebenenfalls ethoxyliert sein können; Alkali- und Ammoniumsalze von Carbonsäuren; ampholytische Tenside , wie langkettig substituierte Aminosäuren oder Betaine; nichtionische Tenside, wie Alkyl-, Alkylaryl-, Fettalkoholpolyglykolether; Ethylenoxid/Propylenoxid (EO/PO)-Blockcopolymere, -Fettalkohole, und -Alkylphenol-Addukte, Naturstoffe und deren Derivate, polare Gruppen enthaltende lineare Organo(poly)siloxane.

In einer bevorzugten Ausführungsform der Erfindung enthält die Dispersion mindestens ein anionisches oder ein nichtionisches Tensid. Erfindungsgemäß ist es bevorzugt, den Gehalt gering zu halten. Die erfindungsgemäß eingesetzte Dispersion kann solche grenzenflächenaktive Substanzen enthalten in einer Menge von 0 bis zu etwa 5,0 Gew.-%, insbesondere von 0,2 bis 2,5 Gew.-% (bezogen auf den Festkörper).

Es können inerte Polymere enthalten sein. Diese sind von den Polyvinylacetatcopolymeren A und den polaren Polymeren B verschieden. Geeignete inerte Polymere sind beispielsweise Polyvinylpyrrolidon oder Polycarbonsäuren, wie Poly(meth)acrylsäure.

Als Konservierungsmittel kann man vorteilhaft Benzoate, amidische Substanzen und Hydroxybenzoesäureester oder andere handelsübliche geeignete Biozide in Mengen von 0,2 bis 1 Gew.-% zufügen. Als weitere Zusatzstoffe kann die erfindungsgemäße Dispersion bis zu 2 Gew.-%, vorzugsweise 0,1 bis 1 Gew.-% an UV-Stabilisatoren enthalten. Als UV-Stabilisatoren besonders geeignet sind die so genannten HALS-Verbindungen.

Beispielsweise kann die erfindungsgemäß geeignete Dispersion noch Anteile von Weichmachern oder Klebrigharzen enthalten, wobei paraffinartige Substanzen weniger geeignet sind. Die Menge, bezogen auf das gesamte Beschichtungsmittel, soll unterhalb 10 Gew.-% betragen, vorzugsweise unterhalb 5 Gew.-%, besonders bevorzugt unterhalb 1 Gew.-% und ganz besonders bevorzugt unterhalb 0,1 Gew.-%. Insbesondere soll die Menge so gering sein, dass resultierende Beschichtungen nach der Trocknung nicht klebrig sind (tack-free).

In einer Ausführungsform können auch Pigmente oder/und Füllstoffe in dem erfindungsgemäß eingesetzten Beschichtungsmittel enthalten sein. Diese können der Dispersion nachträglich zugemischt werden, oder bevorzugt findet die Polymerisation in Gegenwart der Füllstoffe statt. Geeignet sind insbesondere organische oder anorganische Füllstoffe, die eine Partikelgröße von etwa 0,1 bis etwa 20 µm, beispielsweise 0,5 bis 10 µm aufweisen. Unter Füllstoffen sind auch Pigmente zu verstehen, solange diese in der Wasserphase nicht löslich sind. Als Pigmente/Füllstoff eignen sich im Rahmen der vorliegenden Erfindung beispielsweise anorganische Stoffe, die unter den Lagerbedingungen inert sind. Beispiele für geeignete anorganische Materialien sind Schichtsilikate, Quarzmehl, Kieselgel, Bariumsulfat, Metalloxide, Zeolithe, Calciummineralien, Aluminium- oder Zinkoxid. Die genannten anorganischen Materialien können einzeln oder im Gemisch eingesetzt werden. Die Menge der Füllstoffe in den erfindungsgemäßen Beschichtungsmitteln kann 0 bis 49 Gew.-% (bezogen auf den Festkörper) betragen.

Der Festkörperanteil der erfindungsgemäß eingesetzten wässrigen Dispersion soll zwischen 30 bis 70 Gew.-% betragen, insbesondere von 35 bis 60 Gew-%. Bevorzugt ist die Zusammensetzung frei von Substanzen, die lebensmittelrechtlich nicht zugelassen sind.

Bevorzugt sollen die Dispersionen frei von organischen Lösemitteln sein, d.h. es sollen nur geringe Mengen unterhalb 0,5 Gew.-% enthalten sein.

Der pH-Wert (23°C) der erfindungsgemäß eingesetzten Polymerdispersion kann in weiten Grenzen variieren. Bevorzugt liegt der pH-Wert (23°C) jedoch zwischen 3,5 und 9,0, besonders bevorzugt zwischen 5,5 und 8,0 und insbesondere zwischen 6,5 und 8,0. Dabei kann, wenn der pH-Wert durch Zugabe von Neutralisationsmitteln eingestellt wird, gegebenenfalls eine Veränderung der vorliegenden Form der Polymeren geschehen, beispielsweise kann ein Polymer von der Dispersionsform in eine gelöste Form übergehen, wodurch sich die rheologischen Eigenschaften ändern können.

Die Viskosität der erfindungsgemäß eingesetzten wässrigen Dispersion soll bei einer Temperatur von 20 bis 40°C zwischen 10 bis 10000 mPas betragen, insbesondere über 100 mPas (Kegel-Platte Messung, DIN 53229). Diese Dispersionen sind stabil und lagerfähig. Die Viskosität des fertigen Beschichtungsmittels liegt bei 25 °C bevorzugt unter 8000 mPas, insbesondere unter 5000 mPas. Die Viskosität kann so eingestellt werden, dass Auftragsverhalten, Verhalten auf einer gegebenenfalls eingesetzten Auftragsvorrichtung und Filmbildung unterstützt werden.

Die geeigneten wässrigen Dispersionen können durch Mischen der Komponenten in an sich bekannter Weise hergestellt werden. Dabei ist es zweckmäßig, zunächst eine Polymerdispersion herzustellen. Durch Neutralisation der anionischen Gruppen kann dann Viskosität und Lösungverhalten der Dispersion eingestellt werden.

Verfahren zum Auftragen der wässrigen Dispersion auf die folienförmigen Substrate sind allgemein bekannt. Eine entsprechende Dispersion kann beispielsweise durch Sprühen, Walzen, Drucken, Rakeln oder ähnliche Verfahren aufgebracht werden. Dabei wird die flüssige Beschichtung aufgetragen, sie kann verfließen und der Wasseranteil der Beschichtung verdunstet. Das kann beispielsweise durch zusätzliche Maßnahmen, wie Überleiten von Gasen, beispielsweise Luft oder durch erhöhte Temperatur, beispielsweise durch warme Luft oder IR-Bestrahlung beschleunigt werden. Bei porösen Substraten wird ein Teil des Wassers auch durch das Substrat aufgenommen.

Beschichtungsverfahren dafür sind dem Fachmann bekannt. Nach der Beschichtung werden nichtklebrige Oberflächen erhalten. Diese können gelagert werden, es ist jedoch ebenfalls möglich, sie direkt weiterzuverarbeiten. Auch beim Rollen oder Stapeln haften die Substrate nach dem Trocknen der Beschichtung nicht aufeinander.

Beispielsweise ist es möglich, die beschichteten Substrate mit anderen Schichten zu versehen, beispielsweise zu laminieren oder zu beschichten. Dabei kann die Laminierung oder eine zusätzliche Beschichtung auf der mit der wässrigen Dispersion beschichteten Seite des Substrats durchgeführt werden, beispielsweise mit Polyethylenfilmen, Polyesterfilme oder Siegelschichten. Es ist jedoch ebenso möglich, dass auf der der Beschichtung abgewandten Seite des Substrates weitere Beschichtungen oder weitere Schichten aufgebracht werden.

Erfindungsgemäß ist es nur erforderlich, dass auf der nach innen zugewandten Seite der Verbundfolie eine durchgehende Beschichtung mit einer erfindungsgemäß eingesetzten Dispersion hergestellt wurde. Die Schichtstärke (trocken) soll von 2 bis 100 g/m² betragen, beispielsweise von 3 bis 50 g/m², vorzugsweise von 3 bis 40 g/m².

In der weiteren Verarbeitung können auf der der Beschichtung gegenüber liegenden Seite auch Druckverfahren zum Auftragen von Druckbildern durchgeführt werden. Das kann unmittelbar vor der weiteren Konfektionierung geschehen, es können jedoch auch schon beim Hersteller dieser folienförmigen Substrate entsprechende Druckvorgänge ausgeführt werden.

Aus den erfindungsgemäß beschichteten folienförmigen Substraten können Verpackungen hergestellt werden. Dabei werden die gelieferten Substrate, beispielsweise in Rollenform, auf passende Größen konfektioniert und zu Verpackungen geformt, ggf. zusammengeklebt oder mit Substraten anderer Zusammensetzung verklebt. Es können aus den erfindungsgemäß beschichteten Substraten beispielsweise Verpackungen für Lebensmittel, für ölhaltige Produkte, für geruchsintensive Produkte oder ähnliche Güter hergestellt werden. Dabei ist es erfindungsgemäß zweckmäßig, wenn die erfindungsgemäß beschichtete Seite des folienförmigen Substrates dem zu verpackenden Gut zugewandt ist. Auf der Außenseite der Folie können beispielsweise die Druckbilder aufgetragen sein.

Die erfindungsgemäß hergestellten Beschichtungen verhindern eine Diffusion oder Migration von ölartigen Substanzen durch das Trägersubstrat oder aus dem Trägersubstrat. Unter ölartigen Verbindungen im Rahmen dieser Erfindung werden feste, flüssige oder auch verdampfbare Substanzen verstanden, die unpolare Eigenschaften aufweisen. Insbesondere handelt es sich um Kohlenwasserstoff-basierte Substanzen, beispielsweise aliphatische, cycloaliphatische, aromatische oder naphthenische Öle (MOSH, MOAH) oder auch Weichmacher. Es kann sich dabei um Öle und Derivate handeln.

Weiterhin werden auch geringe Mengen der bekannten organischen Öle durch die Beschichtung zurückgehalten. Es kann sich dabei um Öle oder Fette handeln, die in natürlichen Produkten vorhanden sind, beispielsweise nicht-trocknende oder halbtrocknende Kohlenwasserstoff-basierte Öle.

Eine dritte Klasse von Verbindungen, die in ihrer Diffusion oder Migration behindert werden, sind niedermolekulare kohlenwasserstoffbasierte Substanzen, die als Geruchsstoff auftreten oder in Otto- und Dieselkraftstoffen enthalten sind. Beispiele für solche Verbindungen sind Terpene oder Derivate, wie Limonen, oder Naphthalin.

Insbesondere werden solche Kohlenwasserstoffe durch eine erfindungsgemäß hergestellte Beschichtung an der Diffusion gehindert, die lineare oder cyclische Kohlenwasserstoffe mit mehr als 10 C-Atomen enthalten, insbesondere auch mehr als 12 C-Atome. Diese sind üblicherweise flüssig oder fest, können aber durch unterschiedliche Substrate migrieren.

Ein mit einer Beschichtung nach der Erfindung versehenes Substrat vermindert oder verhindert, dass ölartige Substanzen durch das Substrat migrieren können. Dabei werden beispielsweise auf der Substrataußenfläche befindliche Substanzen von dem Inneren der Verpackung ferngehalten. Eine andere Anwendungsform verhindert eine Migration aus allgemein in den Trägersubstraten vorhandenen Verunreinigungen. Beispielsweise kann recycliertes Papier auch Reste von Druckfarben-Lösungsmitteln enthalten. Solche Verunreinigungen können an einer Diffusion behindert werden. Eine weitere Anwendungsform verhindert, dass geruchsintensive Stoffe durch Verpackungen migrieren können. Bei solchen Gegenständen ist es erwünscht, wenn riechende Inhaltsstoffe nicht durch die Verpackung nach außen dringen.

Die Mehrschichtsubstrate können zusätzliche weitere Schichten enthalten, die andere Funktionen übernehmen, beispielsweise als Trägersubstrat, zur Verbesserung der Reißfestigkeit, als Wasserdampfsperre, als Sperre gegen spezielle Gase. Andere Schichten können zur Dekoration oder als Verklebungsschicht dienen.

Insgesamt können aus den beschriebenen beschichteten folienförmigen Substraten Verpackungen hergestellt werden, die für Produkte des täglichen Verbrauchs eine einfache Verpackung ergeben. Diese schirmt den Inhalt von den äußeren Verpackungsschichten oder der Umgebung ab. Eine Migration oder Diffusion von ölartigen Substanzen durch das beschichtete Substrat wird reduziert. Die Erfindung stellt eine einfache Zusammensetzung zur Verfügung, um entsprechende Beschichtungen herzustellen.

### Beispiele:

Im Folgenden wird die Erfindung anhand von Beispielen näher erläutert. Prozentangaben bedeuten, soweit nicht anderweitig angegeben, Gewichtsprozent.

### Beispiel 1

Es wird eine Polyvinylacetatdispersion eingesetzt, die unter der Bezeichnung Adhesin A6058 kommerziell erhältlich ist (Henkel AG & Co. KGaA). Diese hat einen Festkörper von 55 %. Ein geringer Teil der Acetatgruppen ist hydrolysiert. Es sind 0,5 % eines nichtionischen Emulgators enthalten.
Zu 66,5 % Dispersion werden 1,5 % Polyvinylalkohol (M_{w} 190000 g/mol) zugesetzt und mit 32 % Wasser vermischt.
Festkörper: 38,5 %
Viskosität: 200 mPas

### Beispiel 2

Es werden die gleichen Bestandteile wie in Beispiel 1 eingesetzt, wobei jedoch die Mengen variiert werden. 70 % PVAc-Dispersion, 4,5 % Polyvinylalkohol und 25,5 % Wasser.
FK: 43 %
Viskosität: 500 mPas

### Beispiel 3

Es wird eine PVAc-Dispersion eingesetzt, die unter der Bezeichnung Wormalit PM 5208 kommerziell erhältlich ist (Henkel AG & Co. KGaA) (Festkörper 55 %). 90 % PVAc-Dispersion, 1,5 % Polyvinylalkohol und 8,5 % Wasser.
FK: 51 %
Viskosität: 8000 mPas

### Beispiel 4

Zu 62,5 % einer Polyvinylacetatdispersion, die unter der Bezeichnung Adhesin A6058 kommerziell erhältlich ist (Henkel AG & Co. KGaA) werden 2,76 % Polyvinylalkohol (M_{w} 190000 g/mol) zugesetzt und mit 34,74 % Wasser vermischt.
Festkörper: 37,1 %
pH (23°C): 4

### Beispiel 5

Beispiel 4 wird wiederholt, wobei die resultierende Dispersion jedoch mit NaOH auf einen pH-Wert (23°C) von 7 eingestellt wird.
Festkörper: 37,1 %
pH (23°C): 7

### Beispiel 6

Zu 62,5 % einer Polyvinylacetatdispersion, die unter der Bezeichnung Adhesin A6058 kommerziell erhältlich ist (Henkel AG & Co. KGaA) werden 17,5 % Poly(natriumacrylat) zugesetzt und mit 20 % Wasser vermischt.
Festkörper: 51,9 %

### Beispiel 7

Zu 62,5 % einer Polyvinylacetatdispersion, die unter der Bezeichnung Adhesin A6058 kommerziell erhältlich ist (Henkel AG & Co. KGaA) werden 15 % Poly(natriumacrylat) und 2,75 % Polyvinylalkohol (M_{w} 190000 g/mol) zugesetzt und mit 19,75 % Wasser vermischt. Die resultierende Dispersion wird mit NaOH auf einen pH-Wert (23°C) von 7 eingestellt. Festkörper: 52,1 %
pH (23°C): 7

### Beispiel 8

Zu 62,5 % einer Polyvinylacetatdispersion, die unter der Bezeichnung Adhesin A6058 kommerziell erhältlich ist (Henkel AG & Co. KGaA) werden 0,9 % Hydroxypropylmethylcellulose zugesetzt und mit 36,6 % Wasser vermischt.
Festkörper: 35,3 %

### Beispiel 9

Zu 65 % einer Polyvinylacetatdispersion, die unter der Bezeichnung Adhesin A6058 kommerziell erhältlich ist (Henkel AG & Co. KGaA) werden 5 % Poly(natriumstyrolsulfonat) zugesetzt und mit 30 % Wasser vermischt.
Festkörper: 40,8 %

### Beispiel 10

Zu 65 % einer Polyvinylacetatdispersion, die unter der Bezeichnung Adhesin A6058 kommerziell erhältlich ist (Henkel AG & Co. KGaA) werden 1,8 % Carboxymethylcellulose Natriumsalz zugesetzt und mit 33,2 % Wasser vermischt.
Festkörper: 37,6 %

### Vergleichsbeispiel 1

Es wird eine reine Polyvinylacetatdispersion (Adhesin A6058) eingesetzt.
FK: 55 %
Viskosität: 8500 mPas

### Vergleichsbeispiel 2:

| | |
|---|---|
| EVA-Dispersion (Vinamul 3161, Celanese) | FK: 59 % |
| | |
| Vergleichsbeispiel 3: | |
| Polyacrylat co-acrylnitril (Acronal 81 D, BASF) | FK: 60 % |
| | |
| Vergleichbeispiel 4: | |
| Polyesterurethan (Dispercoll KA 8755, Bayer) | FK: 40 % |

Bei den in den Vergleichsbeispielen eingesetzten Dispersionen handelt sich um handelsübliche Dispersionen.

### Versuchsdurchführung:

Auf ein Substrat wird mit einem Kastenrakel oder einem einstellbaren Rakel jeweils eine der Dispersionen gemäß den Beispielen 1 bis 10 bzw. gemäß den Vergleichsbeispielen 1 bis 4 aufgetragen. Als Substrat wird jeweils ein Kartonsubstrat (Fa. HIG) 190 g/m² eingesetzt.

Die jeweilige Beschichtung wird für 24 Std. bei 25°C getrocknet.
Die Schichtdicke beträgt ca. 20 µm (trocken).

Auf eine Glasflasche (100 ml Weithals) wird ein Deckel aufgeschraubt, der eine runde Öffnung von 4,2 cm aufweist. Diese wird mit dem jeweiligen beschichteten Substrat abgedeckt und am Rand mit dem Deckel abgedichtet. Die beschichtete Fläche ist außen. In die Glasflasche werden als Testsubstanz entweder Limonen (50 mg auf Zellstoff; Simulanz aliphatischer Kohlenwasserstoffe / MOSHs) oder Naphthalin (50 mg; Simulanz aromatischer Kohlenwasserstoffe / MOAHs) gegeben. Die Flaschen werden jeweils in einen Kunststoffbeutel verpackt, der wiederverschließbar ist. Diese werden bei 25°C gelagert. Nach verschiedenen Zeiten werden aus dem Beutel Geruchsproben entnommen, um festzustellen, ob der stark riechende Versuchsstoff durch die beschichtete Substratfläche migriert ist. Bei den Testsubstanzen handelt es sich um stark riechende, olfaktorisch leicht und eindeutig bestimmbare Substanzen. Die Ergebnisse sind in Tabelle 1 wiedergegeben.

**Tabelle 1:**

| | Limonen nachweisbar deutlich | Limonen erste Anzeichen | Naphthalin nachweisbar deutlich | Naphthalin erste Anzeichen |
|---|---|---|---|---|
| Beispiel 1 | 24 h | 3 h | 24 h | 24 h |
| Beispiel 2 | > 24 h | 4 h | > 24 h | 24 h |
| Beispiel 3 | 24 h | 4 h | 24 h | 6 h |
| Beispiel 4 | > 24 h | 3 h | > 24 h | 7 h |
| Beispiel 5 | > 24 h | 5 h | > 24 h | > 24 h |
| Beispiel 6 | 25 h | 3 h | 26 h | 24 h |
| Beispiel 7 | 25 h | 3 h | 26 h | 24 h |
| Beispiel 8 | 25 h | 19 h | 26 h | 25 h |
| Beispiel 9 | > 24 h | 20 h | > 70 h | > 24 h |
| Beispiel 10 | > 70 h | 20 h | > 70 h | > 24 h |
| Vergleichsbeispiel 1 | 24 h | 3 h | 24 h | 6 h |
| Vergleichsbeispiel 2 | 2 h | 2 h | 2 h | 2 h |
| Vergleichsversuch 3 | 2 h | 2 h | 6 h | 5 h |
| Vergleichsversuch 4 | 5 h | 5 h | 2 h | 2 h |

Es zeigt sich, dass bereits bei Verwendung einer reinen Polyvinylacetatdispersion (Vergleichsbeispiel 1) niedermolekulare Beispielsubstanzen für längere Zeiten zurückgehalten werden als mit anderen Beschichtungen (Vergleichsbeispiele 2 bis 4). Überraschenderweise lassen sich die Barriereeigenschaften durch Zugabe eines zusätzlichen polaren Polymers zu einer wässrigen Polyvinylacetatdispersion (Beispiele 1 bis 10) nochmals deutlich verbessern.

In der Praxis werden Verpackungen auf Basis beschichteter Kartonsubstrate oftmals durch Falten entsprechender flächiger Substrate hergestellt. Dabei kann es zu einer Beschädigung der Beschichtung kommen. Um das Verhalten erfindungsgemäß beschichteter Substrate unter diesen Bedingungen zu testen, wurden entsprechend obigem Vorgehen Substrate untersucht, die nach Herstellung der jeweiligen Beschichtung einmal mittig um 180° geknickt und wieder aufgeklappt wurden. Die Ergebnisse sind in Tabelle 2 wiedergegeben.

**Tabelle 2:**

| | Limonen nachweisbar deutlich | Limonen erste Anzeichen | Naphthalin nachweisbar deutlich | Naphthalin erste Anzeichen |
|---|---|---|---|---|
| Beispiel 1 | 24 h | 3 h | 24 h | 24 h |
| Beispiel 2 | 24 h | 4 h | 24 h | 6 h |
| Vergleichsbeispiel 1 | 2 h | 2 h | 2 h | 2 h |

Es zeigt sich, dass unter diesen Bedingungen bei Verwendung einer reinen Polyvinylacetatdispersion (Vergleichsbeispiel 1) die niedermolekularen Beispielsubstanzen nur unzulänglich zurückgehalten werden. Durch Einsatz einer Kombination von Polyvinylacetat und Polyvinylalkohol (Beispiele 1 bis 2) sind die Barriereeigenschaften trotz des Knickens noch ausgeprägt.

## Patentansprüche

1. Verwendung einer wässrigen Dispersion enthaltend mindestens 50 Gew-% (bezogen auf den Festkörper) mindestens eines Polyvinylacetatcopolymers A und mindestens ein davon unterschiedliches Polymer B, wobei Polymer B Hydroxy- und/oder ionische Gruppen aufweist, zur Herstellung einer Barrierebeschichtung auf folienförmigen Substraten.

2. Verwendung nach Anspruch 1, **dadurch gekennzeichnet, dass** ölartige Substanzen in der Diffusion gehindert werden, insbesondere Kohlenwasserstoffe oder Kohlenwasserstoffderivate mit mehr als 10 C-Atomen.

3. Verwendung nach mindestens einem der Ansprüche 1 bis 2, **dadurch gekennzeichnet, dass** Polymer B ausgewählt ist aus Polyvinylalkoholen, Polyelektrolyten, Cellulosederivaten, Chitosanderivaten und deren Mischungen.

4. Verwendung nach Anspruch 3, **dadurch gekennzeichnet, dass** Polymer B ausgewählt ist aus Polyvinylalkoholen, die einen Hydrolysegrad zwischen 70 und 99 Gew.-% aufweisen.

5. Verwendung nach Anspruch 3, **dadurch gekennzeichnet, dass** die Polyelektrolyte ausgewählt sind aus Polyampholyten, Gummi arabicum, Copolymeren des Vinylpyrrolidons mit mindestens einem Monomer, welches eine quaternäre Ammoniumgruppe enthält, und Salzen der Polyacrylsäuren, der Polymethacrylsäuren, der Poly(acrylsäure-co-acroleine), der Polyalginsäuren, der Pektine, der Polyphosphorsäuren, der Polyvinylphosphonsäuren, der Polyvinylsulfonsäuren, der Polyvinylschwefelsäuren und der Poly(styrol-4-sulfonsäuren).

6. Verwendung nach Anspruch 3, **dadurch gekennzeichnet, dass** die Cellolosederivate ausgewählt sind aus Hydroxymethylcellulose, Hydroxyethylcellulose, Hydroxypropylcellulose, Hydroxypropylmethylcellulose und Carboxymethylcellulose.

7. Verwendung nach Anspruch 3, **dadurch gekennzeichnet, dass** die Chitosanderivate ausgewählt sind aus Chitosanpyroglutamat, Chitosanlactat und Hydroxypropylchitosan.

8. Verwendung nach mindestens einem der Ansprüche 1 bis 7, **dadurch gekennzeichnet, dass** die Gesamtmenge an Polymer B (bezogen auf den Festkörper) 1 bis 50 Gew-% beträgt.

9. Verwendung nach mindestens einem der Ansprüche 1 bis 8, **dadurch gekennzeichnet, dass** die Dispersion frei von Wachsen und / oder Lösemitteln ist.

10. Verwendung nach mindestens einem der Ansprüche 1 bis 9, **dadurch gekennzeichnet, dass** die Dispersion auf poröse Substrate als Beschichtung aufgetragen wird, insbesondere auf Papier oder Karton.

11. Verwendung nach mindestens einem der Ansprüche 1 bis 10, **dadurch gekennzeichnet, dass** die Beschichtung eine Dicke (trocken) von 3 bis 40 g/ m² aufweist.

12. Verwendung nach mindestens einem der Ansprüche 1 bis 11, **dadurch gekennzeichnet, dass** das Substrat als Verpackung ausgebildet ist und die Barrierebeschichtung auf der Innenseite der Verpackung ausgebildet ist.

13. Verpackung zum Umhüllen von Produkten, **dadurch gekennzeichnet, dass** die Verpackung auf der dem Produkt zugewandten Seite eine Beschichtung aufweist, die mittels der Verwendung nach mindestens einem der Ansprüche 1 bis 12 hergestellt ist.

14. Verpackung nach Anspruch 13, **dadurch gekennzeichnet, dass** die Verpackung auf der Außenseite bedruckt ist.

15. Verpackung nach mindestens einem der Ansprüche 13 bis 14, **dadurch gekennzeichnet, dass** die Verpackung ein Mehrschichtsubstrat umfasst, wobei mindestens eine Schicht aus Papier oder Karton mit einer Barrierebeschichtung enthalten ist.

## Claims

1. Use of an aqueous dispersion for producing a barrier coating on film-like substrates, which aqueous dispersion contains at least 50 % by weight (based on the solids) of at least one polyvinyl acetate copolymer A and at least one polymer B that is different from said polyvinyl acetate copolymer, wherein polymer B contains hydroxy and/or ionic groups.

2. The use according to claim 1, **characterized in that** oily substances are hindered in the diffusion, in particular hydrocarbons or hydrocarbon derivatives having more than 10 C atoms.

3. The use according to at least one of claims 1 to 2, **characterized in that** polymer B is selected from polyvinyl alcohols, polyelectrolytes, cellulose derivatives, chitosan derivatives and mixtures thereof.

4. The use according to claim 3, **characterized in that** polymer B is selected from polyvinyl alcohols having a degree of hydrolysis of between 70 and 99 % by weight.

5. The use according to claim 3, **characterized in that** the polyelectrolytes are selected from polyampholytes, gum arabic, copolymers of vinyl pyrrolidone having at least one monomer that contains a quaternary ammonium group, and salts of polyacrylic acids, polymethacrylic acids, poly(acrylic acid-co-acrolein), polyalginic acids, pectins, polyphosphoric acids, polyvinylphosphonic acids, polyvinylsulfonic acids, polyvinylsulfuric acids and poly(styrene-4-sulfonic acids).

6. The use according to claim 3, **characterized in that** the cellulose derivatives are selected from hydroxymethyl cellulose, hydroxyethyl cellulose, hydroxypropyl cellulose, hydroxypropylmethyl cellulose and carboxymethyl cellulose.

7. The use according to claim 3, **characterized in that** the chitosan derivatives are selected from chitosan pyroglutamate, chitosan lactate and hydroxypropyl chitosan.

8. The use according to at least one of claims 1 to 7, **characterized in that** the total amount of polymer B (based on the solids) is 1 to 50 % by weight.

9. The use according to one of claims 1 to 8, **characterized in that** the dispersion is free of waxes and/or solvents.

10. The use according to at least one of claims 1 to 9, **characterized in that** the dispersion is applied as a coating to porous substrates, in particular paper or cardboard.

11. The use according to at least one of claims 1 to 10, **characterized in that** the coating has a (dry) thickness of from 3 to 40 g/m².

12. The use according to at least one of claims 1 to 11, **characterized in that** the substrate is in the form of packaging and the barrier coating is formed inside the packaging.

13. Packaging for wrapping products, **characterized in that** the packaging comprises a coating on the side that faces the product, which coating is produced by means of the use according to at least one of claims 1 to 12.

14. The packaging according to claim 13, **characterized in that** the packaging is printed on the outside.

15. The packaging according to one of claims 13 to 14, **characterized in that** the packaging comprises a multi-layer substrate, at least one layer being contained therein which is made of paper or cardboard and comprises a barrier coating.

## Revendications

1. Utilisation d'une dispersion aqueuse contenant au moins 50% en poids (sur la base des matières solides) d'au moins un copolymère d'acétate de polyvinyle A et au moins un polymère B différent de celui-ci, le polymère B comportant des groupes hydroxy et/ou ioniques, pour produire un revêtement formant barrière sur des substrats pelliculaires.

2. Utilisation selon la revendication 1, **caractérisée en ce que** des substances oléiformes peuvent être évitées dans la diffusion, notamment des hydrocarbures ou des dérivés d'hydrocarbures ayant plus de 10 atomes de carbone.

3. Utilisation selon l'une des revendications 1 et 2, **caractérisée en ce que** le polymère B est choisi parmi les alcools polyvinyliques, les polyélectrolytes, les dérivés de la cellulose, les dérivés du chitosan et leurs mélanges.

4. Utilisation selon la revendication 3, **caractérisée en ce que** le polymère B est choisi parmi les alcools polyvinyliques ayant un degré d'hydrolyse compris entre 70 et 99% en poids.

5. Utilisation selon la revendication 3, **caractérisée en ce que** les polyélectrolytes sont choisis parmi les polyampholytes, la gomme arabique, les copolymères de la vinylpyrrolidone comportant au moins un monomère qui contient un groupe ammonium quaternaire, et les sels des acides polyacryliques, des acides polyméthacryliques, des co-acroléines de l'acide polyacrylique, des acides polyalginiques, des pectines, des acides polyphosphoriques, des acides polyvinylphosphoniques, des acides polyvinylsulfoniques, des acides polyvinylsulfuriques et des acides polystyrène-4-sulfoniques.

6. Utilisation selon la revendication 3, **caractérisée en ce que** les dérivés de la cellulose sont choisis parmi l'hydroxyméthylcellulose, l'hydroxyéthylcellulose, l'hydroxypropylcellulose, l'hydroxypropylméthylcellulose et la carboxyméthylcellulose.

7. Utilisation selon la revendication 3, **caractérisée en ce que** les dérivés du chitosan sont choisis parmi le pyroglutamate de chitosan, le lactate de chitosan et l'hydroxypropyle de chitosan.

8. Utilisation selon l'une des revendications 1 à 7, **caractérisée en ce que** la quantité totale de polymère B (sur la base des matières solides) est de 1 à 50% en poids.

9. Utilisation selon au moins une des revendications 1 à 8, **caractérisée en ce que** la dispersion est exempte de cires et/ou de solvants.

10. Utilisation selon au moins une des revendications 1 à 9, **caractérisée en ce que** la dispersion est appliquée sous forme de revêtement sur des substrats poreux, en particulier du papier ou du carton.

11. Utilisation selon l'une des revendications 1 à 10, **caractérisée en ce que** le revêtement à une épaisseur (sèche) de 3 à 40 g/m².

12. Utilisation selon l'une quelconque des revendications 1 à 11, **caractérisée en ce que** le substrat est mis sous la forme d'un emballage, et le revêtement formant barrière est formé à l'intérieur de l'emballage.

13. Emballage destiné à emballer des produits, **caractérisé en ce que** l'emballage comporte du côté produit un revêtement qui est fabriqué par l'utilisation selon l'une des revendications 1 à 12.

14. Emballage selon la revendication 13, **caractérisé en ce que** l'emballage est imprimé du côté extérieur.

15. Emballage selon l'une des revendications 13 à 14, **caractérisé en ce que** l'emballage comprend un substrat multicouche qui contient au moins une couche de papier ou de carton pourvue d'un revêtement formant barrière.
